# EUROPEAN PATENT APPLICATION

(11) **EP 4 625 878 A1**
(43) Date of publication of application: **01.10.2025**
(21) Application number: 24315110.7
(22) Date of filing: 28.03.2024
(51) Int. Cl.: H04L 9/08

(54) **SEPARATELY AND SECURELY PROCESSING DATA ASSOCIATED WITH DIFFERENT DATA PROVIDERS**

(71) Applicant: Amadeus S.A.S., 06410 Biot (FR)
(72) Inventor: Gentric, Philippe, 06410 Biot (FR); Devaux, Yannick, 06410 Biot (FR); Bianchi, Julien, 06410 Biot (FR); Cormier, Cyrille, 06410 Biot (FR)
(74) Representative: Samson & Partner Patentanwälte mbB

(57) **Abstract**

A computer platform for separately and securely processing data associated with different data providers is provided. The computer platform comprises a first and second data vault, and a plurality of applications. The computer platform is arranged to: store first encryption key(s) associated with the first data provider and encryption key(s) associated with the second data provider, receive first/second encrypted data associated with a first/second data provider, wherein the first/second encrypted data is encrypted using the first/second encryption key(s), store the first/second encrypted data on the respective first/second data vault, decrypt the first/second encrypted data stored on the first/second data vault using the respective first/second encryption key(s) to obtain respective first decrypted data and second decrypted data, decide to provide the first/second decrypted data from the first/second data vault to a first and/or second application on the computer platform, depending on permissions of the first/second data provider.

## Description

The present disclosure relates to the field of encryption and data security.

### BACKGROUND

US 9,189,645 B2 describes aspects that allow multiple devices to function as a coherent whole, allowing each device to take on distinct functions that are complementary to one another. Aspects described herein also allow the devices to function as a coherent whole when interconnected devices and their respective applications are configured to operate in various operation modes, when management policies are employed to control the operation of the interconnected devices and their respective applications, when transferring content between the interconnected devices and storing the content at those devices, when obtaining access credentials for the interconnected devices that enable the devices to access enterprise resources, when a policy agent applies management policies to control operation of and interaction between the interconnected devices, and when the interconnected devices are used to access an enterprise application store.

### SUMMARY

According to a first aspect, a computer platform for separately and securely processing data associated with different data providers is provided. The computer platform comprises: a first data vault, a second data vault and a plurality of applications comprising at least a first application and a second application. The computer platform is arranged to store one or more first encryption keys associated with the first data provider and one or more second encryption keys associated with the second data provider, receive first encrypted data associated with a first data provider and second encrypted data associated with a second data provider, wherein the first encrypted data is encrypted using the one or more first encryption keys and the second encrypted data is encrypted using the one or more second encryption keys, and store the first encrypted data on the first data vault and the second encrypted data on the second data vault. The computer platform is further arranged to decrypt the first data stored on the first data vault using the one or more first encryption keys and decrypt the second data stored on the second data vault using the one or more second encryption keys to obtain respective first decrypted data and second decrypted data and to decide to provide the first decrypted data from the first data vault and/or the second decrypted data from the second data vault to the first and/or second application on the computer platform, depending on permissions of the first data provider and/or the second data provider.

According to a second aspect, a computer-implemented method of separately and securely processing data associated with different data providers is provided. The method comprises storing one or more first encryption keys associated with the first data provider and one or more second encryption keys associated with the second data provider and receiving first encrypted data associated with a first data provider and second encrypted data associated with a second data provider. The first encrypted data is encrypted using the one or more first encryption keys and the second encrypted data is encrypted using the one or more second encryption keys. The method further comprises storing the first encrypted data on a first data vault and the second encrypted data on a second data vault. The method further comprises decrypting the first encrypted data stored on the first data vault using the respective one or more first encryption keys and decrypting the second encrypted data stored on the second data vault using the one or more second encryption keys to obtain respective first decrypted data and second decrypted data. The method further comprises deciding to provide the first decrypted data from the first data vault and/or the second decrypted data from the second data vault to the first and/or second application depending on permissions of the first data provider and/or the second data provider.

According to a third aspect, a computer program product comprising code instructions stored on a computer readable medium to execute the method steps according to the second aspect when said program is executed on a computer platform, is provided.

### BRIEF DESCRIPTION OF THE DRAWINGS

Examples of the invention are now described, also with reference to the accompanying drawings, wherein
Fig. 1 schematically illustrates an example of an architecture with a client device equipped with a vault engine hosting two different data vaults communicating with a key server and a search engine web server.
Fig. 2 schematically illustrates the example architecture of Fig. 1, with the vault engine communicating with an offer aggregator.
Fig. 3 schematically illustrates the key exchange, the encryption and decryption processing between a vault engine on the client device and a key server vault, along with the modules involved in these procedures.
Fig. 4 schematically illustrates an example of a private access to personal secure data vault associated with other providers.
Figs. 5A to 5C schematically illustrate together an example flowchart of the method of separately and securely processing data associated with different data providers with data vaults being implemented on a computer platform (e.g. mobile device).
Fig. 6 schematically illustrates an example with a vault engine being hosted by the key provider/key management party.
Fig. 7 schematically illustrates an example with a plurality of data vaults hosted on a key provider/key management party cloud, as well as a vault engine library hosted by the key provider/key management party and running on a key provider/key management party cloud.
Fig. 8 schematically illustrates an example with a plurality of data vaults hosted on the key provider/key management party cloud with the vault engine library running on a third-party cloud, e.g. on an online travel agency (OLTA) cloud.
Fig. 9 schematically illustrates an example with data vaults partially hosted on the key provider/key management party cloud and data vaults partially hosted by a third party, e.g. on an OLTA party cloud, with the vault engine library running on the third-party cloud, e.g. the OLTA cloud.
Fig. 10 schematically illustrates an example with data vaults partially hosted on the provider/key management party cloud, partially hosted on the third-party cloud, e.g. the OLTA cloud, and partially hosted on the client device, the vault engine library running on the client device.
Fig. 11 schematically illustrates an example with all data vaults being hosted on the client device.
Fig. 12 schematically illustrates an example like Fig. 10 with data vaults partially hosted on the key provider/key management cloud, the third-party cloud (e.g. OLTA cloud) and the client device, with a back-up data vault being hosted by the third party (e.g. on the OLTA cloud) and with instances of the vault engine library running on the third-party cloud (e.g. OLTA cloud) and the client device.
Fig. 13 schematically illustrates an example flowchart of the method of separately and securely processing data associated with different data providers, the method being implemented by a single or a plurality of interconnected computer devices.
Fig. 14 schematically illustrates an example of a computerized system, which may be used to carry out any of the activities and modules illustrated by Figs. 1 to 13.

The drawings and the description of the drawings are of examples of the invention and are not of the invention itself. Like reference signs refer to like elements throughout the following description of examples.

### DESCRIPTION OF EXAMPLES

According to a first aspect, a computer platform for separately and securely processing data associated with different data providers is provided. The computer platform may be, for example, a user device like a mobile device of any kind, like a mobile phone (smartphone), a tablet, a laptop etc. The computer platform may also be a server, in particular a cloud server, a cloud, a virtual machine, or any station employing cloud services.

The computer platform is arranged to receive first encrypted data associated with a first data provider and second encrypted data associated with a second data provider, as well as to store one or more first encryption keys associated with the first data provider and one or more second encryption keys associated with the second data provider, wherein the first encrypted data is encrypted using the one or more first encryption keys and the second encrypted data is encrypted using the one or more second encryption keys.

In general, the first and second data providers are providers of any kind of sensitive data. The first and second encryption keys are different to one another, but may be of the same type: Hence, both encryption keys may be symmetric encryption keys or both of the encryption keys may be asymmetric encryption keys. However, the first and second encryption keys may also be of a different type: Hence, the first encryption key may be a symmetric encryption key, whereas the second encryption key is an asymmetric encryption key or vice versa. ,

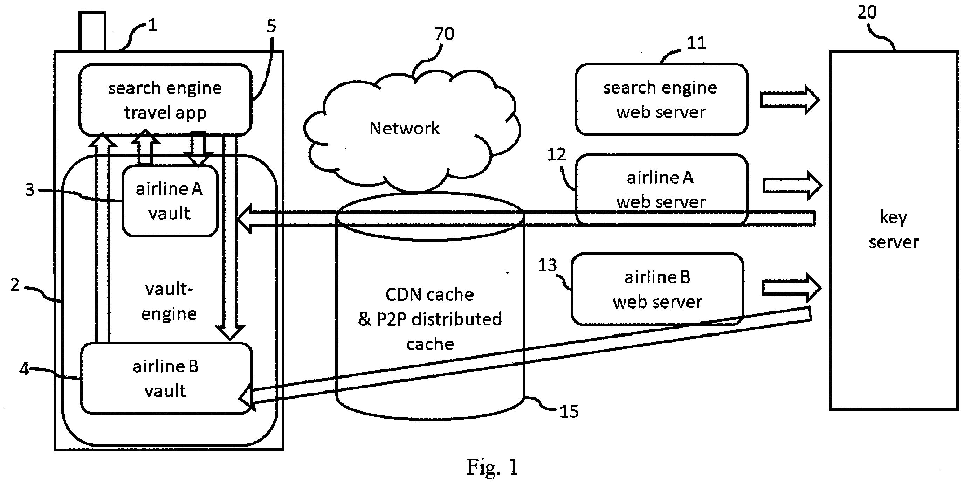

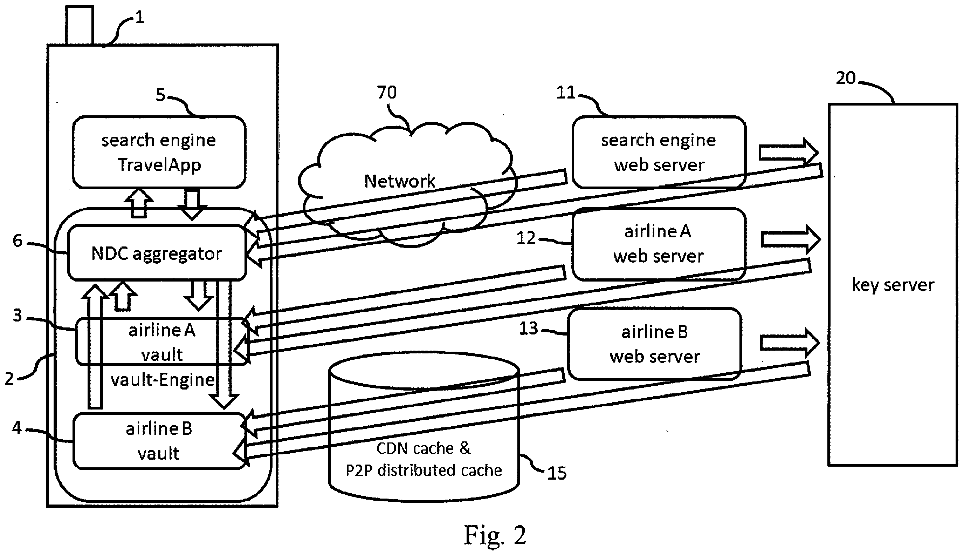

As depicted in Figs. 1 and 2 (see below for a detailed description of the figures), data vaults are integrated into a vault engine running on a computer platform. The computer platform comprises a first data vault, a second data vault and applications. The computer platform is arranged to receive the first encrypted data and to store the first encrypted data on a first data vault and to receive the second encrypted data and to store the second encrypted data on a second data vault. The first and second data vaults are secure data vaults provided separated from each other on the computer platform.

The term "data vault" is - in general - used to refer to a storage container that is designed to protect confidential data against unauthorized access.

In relation to the prior art document US 9,189,645 B2 mentioned in the background section, the invention described here solves the problem of providing mutually exclusive access to data provided by third party entities but stored on the same computer platform, wherein the data is to be used by a local application depending on permissions provided by the third-party entities.

The data to be stored in data vaults and the application(s) using the data is not limited to any travel related data mentioned hereinafter, since any travel related application or data is only a non-limiting example. Likewise, the data and/or the application(s) could also be related to online shopping, payment application(s), navigation, technical databases etc.

The first and second data vaults may be a secure data vault - e.g. an encrypted container app to store all kind of files. The data vaults may use AESXTSencryption with SHA-512 hashing (and may be compatible with TrueCrypt or VeraCrypt). When data is stored locally on the computer platform in the first and/or second data vault, a minimum of AES 256 encryption algorithm may be utilized to encrypt the data stored thereon. Other vault security functionalities may also be implemented, such as a logging requirement, wherein all security events occurring inside e.g. a vault engine hosting the first and/or second data vault, are logged and reported to the backend. Also data wiping from the data vaults may be supported, such as in response to an unauthorized access (attempt) being detected, associated encryption keys may be overwritten/erased or even the data itself, stored on the vaults, may be erased.

On the data vaults, several data providers, such as airlines can be "present" with their information/offers, flight information or the like, at the same time, with confidentiality i.e. the first data provider associated with the first data vault cannot access the second data vault associated with the second data provider.

In some examples, the computer platform is arranged to decrypt the first encrypted data stored on the first data vault using the first encryption keys and the computer platform is arranged to decrypt the second encrypted data stored on the second data vault using the one or more second encryption keys to obtain the respective first decrypted data and second decrypted data.

In some examples, the vault engine on the computer platform is arranged to provide the first decrypted data to the application(s) on the computer platform and/or to provide the second decrypted data to the application(s) on the computer platform for further processing the respective first decrypted data and/or second decrypted data by the respective application(s). The vault engine on the computer platform may also provide the first decrypted data and the second decrypted data to the same application or to a plurality of applications without a specific first/second application being dedicated to handle the respective first/second decrypted data.

The application(s) receiving the data from the different vaults identify the received data as stemming from different data providers (such as airlines) and thereby different data vaults by an identifier assigned to the data, like an IATA code or a provider ID, office ID etc. identifying the data. This identifier can be present in the different data stored in the different vaults inherently or may be assigned to the different data by the vault engine. The computer platform may also receive the identifiers from the requestor or the provider, or from the parameter(s) of the request that triggered the fetching and storing of the data.

The provider-specific data are, for example, rules that enable a client to determine (or complete) search results locally and thus save network traffic. The term "client" herein refers to a general actor in a client/server architecture.

The vault engine may be able to store/serve the data received from a specific provider, but the vault engine can also generate/store data content as per rules/code received from the same providers. The corresponding rules/code may follow the same encryption rules as the data. The target application may induce the use of specific rules to be applied on the data, resulting in the generated data content.

A WebAssembly (WASM) code - WASM defines a portable binary-code format and a corresponding text format for executable programs as well as software interfaces for facilitating interactions between such programs and their host environment - may be used to present the information like offers in a desired way to a key provider (server). The WASM code may convey the rules while ensuring portability to different types of mobile device hardware.

As an alternative, the rules may be exchanged in a structured format and the vault engine may be adapted to implement the specifications of the rule engines.

As a further alternative, native binary like Xcode (iOS^{®}) or java^{®} (android^{®}) could be used to present the information like offers in a desired way.

The first and second applications are arranged to display the first decrypted data or the second decrypted data on a display of the computer platform, for example, the display of a mobile device like a smartphone.

However, as mentioned above, if the data stored in the vaults is used by the client to determine or complete search results locally on the client, the data is not simply displayed as it is, but the search results generated based on the data may be displayed by the one or more applications.

The data vaults may enable, on the one hand, the data of different content providers to be kept separated on the computer platform before they are provided to the applications, but on the other hand, provider-specific content to be generated (at least partially) by the computer platform (instead of being generated entirely by the content provider) by storing generation rules and/or generation mechanisms in the data vaults. An offer generating engine may be stored on the first and second data vaults, which generates local content (e.g. responses to search queries) in response to local requests, like search queries. Thus, a data vault in the sense of the current application may be more than just a local secure and separated data storage, but may also be employed as a local search engine. By providing the first and second data vaults with the capability of participating in the generation of local content that can be received by the applications on the computer platform, network traffic capacity that would otherwise be required to retrieve the content from a network-based content provider can be saved.

The first and second applications are, for example, target applications for the data stored in the first/second data vaults.

Several applications accessing the first/second data vaults, such as OLTA applications are "present" on the end-user computer platform at the same time, with confidentiality, such that, for example, the data (e.g. offers) each target application receives from a vault engine implementing the first and/or second data vault may be different as the data provider (e.g. airline) may prescribe, since the data (e.g. offer) may be specific to target application (e.g. OLTA application) and generated with application-specific parameters and data, including specific mark-ups etc.

The application-specific encrypted data (e.g. offers) can be pushed (if the data provider, e.g. airline chooses to do so) into (a) content delivery network(s) (CDN) or (b) peer to peer (P2P) for reuse by other computer platforms, e.g. mobile devices. The encrypted data can be directly distributed by the data providers (e.g. airlines), but only an encryption key provider may provide the encryption keys so when a data provider distributes directly, the data provider sends the encryption keys to the key provider, which may manage a plurality of keys for a plurality of data vaults associated with a plurality of different data providers. As mentioned above, a vault engine running, e.g. on the end-user smartphone or any other computer platform may host the first and/or second data vault and/or the target application(s) on the computer platform. The target application(s), which are arranged to receive the first/second decrypted data, may host the respective first and/or second data vault.

Regarding the nature of different types of offers: Prices data may be encrypted as prices, margins etc. may be considered to be confidential. Nonetheless, travel provider "airline" offers or also travel provider offers may be considered to be public or to be confidential, such as special offers/negotiated offers.

A travel provider (e.g. provider of a target application), such as a travel agency may decrypt an airline offer, create a new offer, re-encrypt the new offer and may then send (e.g. push) the encrypted data into the content delivery network. To provide increased safety/confidentiality, a vault generating offers on a travel provider or airline server could use the end-user public key to encrypt the offer, to generate a user-specific offer. Such user-specific offers may not be stored in a cache (including P2P) to guarantee data security.

Clear-text offers (considered not to be confidential) can be stored in the airline/travel provider cache, but the offer may be encrypted with the user public key. This may consume less computation power compared to using authenticated transport layer security (TLS) connections between the end-user device and the server.

There may be, however, two further scenarios to improve the scalability in terms of implementation cost:

1) the encrypted offers generated by the travel agency/airline could be cached: this means that some clients (maybe preferred clients) are intended to be able to decrypt the data, so the decryption (e.g. "private") key may be provisioned to all these user-end-side vault engine libraries by a security means, e.g. a TLS connection, with user ID authentication etc.

2) customized offers that have been specifically designed in the data vault (using some rule engine etc) could be cached in a specific user's smartphone. Such an offer may be available to other users without e.g. re-computing the price. There may be two different ways to do so: A) the user-side data vault uses a TLS connection to the server, and the travel agency server may encrypt the offer before pushing it back in the cache/P2P, with a travel agency server specific trusted signature; B) the user-side vault may encrypt the offer before pushing it directly in the cache, if the cache is a P2P this may be a sufficient way of data distribution. However, the travel agency specific encryption/signature keys of the above-mentioned process are also provisioned in the client vault library with secure encryption. In this process, it could be possible to repudiate (black-list) keys or to implement scheduled periodic/rolling key changes with a life time assigned to a key.

In some examples, the first data vault and/or the second data vault are hosted by the application(s), e.g. the first data vault is controlled and managed by a first application and the second data vault is controlled and managed by a second application. Further applications may be provided with data stored in the first and/second data vault. In some examples, the one (secure) data vault is employed by a plurality of applications or a plurality of (secure) data vaults are employed for a plurality of applications.

Sensitive and provider-specific code and data (wherein the code may be included into the data) is, for example, encrypted end-to-end between the data provider (server) and the computer platform on which the first data vault and/or the second data vault are hosted by a respective first and/or second target application (e.g. the OLTA application mentioned above).

In some examples, the computer platform is arranged to receive the encrypted data and/or the encryption keys via a content delivery network (CDN), as already mentioned above.

In some examples, the encryption keys to encrypt/decrypt the data received by server(s) associated with the data provider(s) (then) stored on the first/second data vaults are symmetric keys associated with a symmetric encryption system.

In some examples, the computer platform is equipped with a client key pair including a public client key and a private client key, and is arranged to store a symmetric server key, the symmetric server key being encrypted with the public client key and the computer platform is arranged to decrypt the symmetric server key using the private client key.

The data provider (e.g. airline) may ask the key provider for content encryption keys (CEK), which are typically symmetric keys. The data provider (e.g. airline) may encrypt the construction rules (e.g. fares, tariffs, restrictions, availabilities etc.). The fares, tariffs, restrictions, availabilities, as well as the offers are examples for the data that is stored on the data vaults.

The data provider (e.g. airline) may push the data directly into a content delivery network (CDN) to provide updates to the client device. Pushing the data into the content delivery network allows for a fast, or almost immediate distribution of updates.

The data provider (e.g. airline) may also send data (e.g. fares, tariffs, also related WebAssembly (WASM) code - WASM defines a portable binary-code format and a corresponding text format for executable programs as well as software interfaces for facilitating interactions between such programs and their host environment - to present the information like offers in a desired way) to a key provider (server). The key provider (server) may provide the (symmetric) CEKs, encrypt the data and push the data into the CDN. The code could also be shared differently, for example, by the provider pushing libraries built natively for the computer platform (e.g. mobile device) like xcode or JAVA^{®} code for Android^{®}.

The vault engine providing the data vaults or the target applications providing the data vaults may also be equipped with a "secure boot" mechanism: when the vault is started by the target application on the computer platform, it may boot by the dynamic library load, however the boot loader may first verify the signature of the code it boots. If the signature is not genuine, the boot will fail. This "secure boot" mechanism is used to make sure that the code implementing the vault engine hosting the data vaults and/or the code that is used by the target applications to host the data vaults is genuine.

This may also be used to trigger code updates (code repudiation) for security reasons as follows: a (possibly small but) critical piece of the code is not present in the installation file: every time vaults boot, the one or more vaults retrieve the critical code piece from CDN (encrypted with the application specific key) and then decrypt it with the boot-loader version-key. Without the critical piece of code, the boot fails.

The key provider may encrypt the CEKs using Key Encryption Keys (KEK) using an asymmetric encryption engine. There is, for example, one pair of KEK per authorised "user" (or client) for the data, so typically when there are several target applications on the computer platform that are intended to retrieve the data provider content, the content can be encrypted with OLTA-specific (thus: application-specific) KEKs.

Since the data provider (e.g. Lufthansa) vault is only associated with this specific provider (e.g. Lufthansa), the relevant (symmetric) CEKs can be encrypted with (asymmetric) KEKs specific to the provider (here: Lufthansa), for any (target) application on the computer platform (e.g. mobile device), e.g. any OLTA application.

Alternatively, for even more security, in the context of a given (target) application (e.g. Kayak), (symmetric) CEKs can be encrypted with a per-provider and application specific (asymmetric) KEK (e.g. a Lufthansa-for-Kayak specific KEK).

An (asymmetric) KEK comprises a public/private key pair. The (symmetric) CEKs are, for example, encrypted using the public KEK and can only be decoded using the private KEK. The key provider creates and provides the private KEKs, which are securely transferred to one or more data vault(s). The secure provision may feature an authentication by the computer platform as well as a secure (e.g. end-to-end decrypted) network connection. This provides a scalable approach since the (asymmetric) KEKs are small in size, much smaller than the actual encrypted data. Hence, there can be many KEK "versions" e.g. per data provider (e.g. OLTA), per country, even per user etc.

The encryption keys are received by the target applications and passed to a vault engine through the one or more target applications, wherein the encryption is application specific.

In some examples, the encryption is performed specifically to the secure data vault version used at the computer platform and/or where one or more first and second encryption keys have a predetermined expiration date.

Specific KEKs may be provisioned in the various vaults, depending on which target application is hosting the target application specific data vault. When the user starts the e.g. OLTA application, the application may authenticate with a key provider server (e.g. using O-Auth2.0) and then receive the correct (encrypted) KEKs. To provide an example, if the target application on the computer device is made by e.g. Kayak, the target application will authenticate itself as Kayak and the key provider server provides Kayak-specific KEK private keys. The target application (e.g. Kayak application) then passes the (encrypted) KEKs to the corresponding data vault. Since the private KEKs are sensitive, they should be encrypted in multiple ways, for example, target application specific encryption and then also vault-version specific encryption. The overhead for these multiple encryptions is negligible, since the underlying private KEK is small.

The (symmetric) CEK and (asymmetric) KEK may be described in a data structure/format that includes an expiration date, and meta data specifying which specific KEK is to be used to decrypt which specific CEK, like metadata providing the information: "this is a KEK key to decode Lufthansa/Kayak CEK". For the system to stay secure, it may be equipped with protection mechanisms in case of compromising of either the vault engine code and/or keys.

As mentioned above, at least the asymmetric KEK may have an expiration date. This mechanism promotes security, since using the same private KEK for a long time increases the risk of this key being compromised. In this way, also a data provider (e.g. airline) is enabled to repudiate a specific target application on the computer platform (e.g. a specific OLTA application). It may also be possible to black-list some target applications (e.g. OLTA applications) on the computer platform, if data from the data vault is used by a target application in a fraudulent way etc. A symmetric CEK may effectively expire if the content in the CDN is erased by the key provider and replaced by the same content encrypted with a new CEK: vault engines that are not given the up-to-date KEKs will not be able to decrypt this new content.

In general, data security may be enforced within the vault engine implementation by using expiration dates for the keys or the data content (e.g. fares). When using expiration dates, it may be assumed that the vault engine uses a secure clock (e.g. as a service of Secure-Element (SE) implementation or by accessing an external secure clock service with TLS) to prevent a hacker from setting the device system clock to a past time to increase the lifetime of a key or a certificate.

When the vault engine decrypts something on a client device, such as a mobile phone, the result is typically stored in the random-access memory (RAM) of the client device. This may be acceptable under data security considerations since typically the specific RAM record(s) will be transient during computation. A secure implementation could be chosen to make sure that (1) the software is immune from "classical" API attacks such as a buffer overflow etc. so that a "malicious" airline-A code could read (secret) airline-B decrypted data. To ensure this, the data may never be logged anywhere (and may also not be found in trace files even in debug mode). Furthermore, various vault engines may be run in different processes. Should even a transitory storage of secret data on the RAM of e.g. the mobile phone not be acceptable, Secure-Element (SE) services may be used in the development of secure applications communicating with the vault engine.

In a more generalized example, the following encryption/decryption procedure may be performed:

Step 1: Use symmetric encryption to encrypt the data. There is only one key, usually called CEK (Content Encryption Key). This CEK may be XORED with the data, with XOR being performed as an example for a symmetric operation. The XOR operation is used to encrypt and then if XOR is run on the encrypted data with the exact same CEK it decrypts it (if one uses the wrong CEK, decryption produces no sensible data). The CEK may be used by the server to encrypt the content. It is made sure that the CEK is protected.

Step 2: An asymmetric public/private key pair may be used to secure the CEK transport. The client public key is sent to the server. The server may encrypt the CEK with the client public key. The encrypted CEK is sent to the client (e.g. the mobile device). Only the client private key (which is secret for this reason) can decrypt the CEK. The client private key may have been provided to the client originally by a key server over a secure channel. Once the CEK is decrypted, the client can decrypt the content using the CEK.

In some examples, the computer platform comprises an offer generator and/or (in a more generic manner) a means to generate the data according to provider instructions, wherein the computer platform is to receive executable code from the encryption server to enable the target application software to present the decrypted provider data in a customized format associated with the first or the second provider. The data provider is therefore enabled to use a customized design/format package to present offers in the offer-generator/means to generate the data per provider instructions. The executable code that is used for this purpose may be WebAssembly (WASM) code, which can be generated from many programming languages. Using a default code for presentation may also be a valid option for the data provider. The data that the computer platform hosts may correspond to construction rules as well as code to generate the final data therefrom. The final data can be either generic or application specific (see above).

In some examples, the executable code is encrypted with the respective key associated with the first or second data provider.

The computer platform is arranged to decide to provide first decrypted data and/or second decrypted data to a particular target application on the computer platform, depending on permissions received by the first data provider and/or the second data provider. For example, the permissions could also be part of the data stored in the data vaults. According to the permissions it may be decided which raw data and which generation rules may be provided to third-party applications (i.e. not the app, which is provider-specific and assigned to the data vault itself). To provide a further example, the permissions could facilitate that the data stored in the data vault can be provided to the applications, but generation rules/code to provide the applications with a rule of how to merge and display search results/offers may remain in the data vault - hence the permission would then relate only to sharing raw data between the data vaults and the applications.

Accordingly, the data vault could also function like a local provider-specific search engine. On the other hand, it may also be possible that the generation rules could be pushed by the provider, so that a metasearch app on the computer platform could use these rules to create content stored in the data vaults that is shared with the applications.

Each target application access may be performed via strong authentication, therefore data providers (e.g. airlines) are capable of white-listing and black-listing specific applications (e.g. OLTA applications). These distribution rules (black-listing or white-listing) can also be retrieved in encrypted form and/or as WASM code (see above).

The data associated with the first and second data providers may be aggregated before being provided to the (target) applications for display. In some examples, the data associated with the first and the second data provider are related to offers associated with different providers to be displayed on the computer platform, e.g. on the computer platform.

In some examples, each data vault includes a provider specific data cache and a provider specific fare cache for offers. When the target (e.g. OLTA) target application starts, it may execute the vault code. When the (e.g. OLTA) target application has a search to perform, it calls the vault implementing code and passes the query parameters e.g. (origin, destination, dates etc). The vault code may be initialized by a vault for a specific data provider (e.g. airline) or by the target (e.g. OLTA) application hosting the vault.

The (e.g. airline) vault engine first may receive the airline-specific web assembly code from a CDN and may decrypt this code for launching the search using the airline specific design and search functions. Then the vault engine is queried to issue a search request (to e.g. a travel content server) using the query parameters passed by the application. The vault engine retrieves the relevant (e.g. fare) data from CDN and decrypts the data before launching the search engine. As described above, the search process can also involve the retrieval of construction rules (typically retrieved from the CDN) and application code to generate e.g. fares/offers from those construction rules.

The airline-specific web-assembly code is then used to display the offers list resulting from the search and process the offers list, which may include more data retrieved from the CDN. A virtual private network (VPN) can be used to store/distribute (cache) pre-computed content e.g. travel solutions, offers etc. in order to reduce the computational load on the application's search engine on the computer platform, e.g. mobile device. The search results may be retrieved using caching of the results that are sent to the original requestor (the target application) in the CDN. Cache warming strategies may also be applied, for example the key provider may pre-compute frequently asked origin and destination dates like Paris-New York to make sure that the requested search parameters, like the price, are correct. Recommended search results, hence offers, computed in a vault may also be pushed into the CDN. This may have to involve going through the travel content server.

In some examples, server-side backups of the first and second vault engines are provided on one or more servers separate from the computer platform, wherein in the event of a security breach or fault related to at least one of the client-side vaults, the first and second server-side vault engines can be used until the security breach or fault is cleared.

According to a second aspect, a computer-implemented method of separately and securely processing data associated with different data providers is provided. The method comprises storing one or more first encryption keys associated with the first data provider and one or more second encryption keys associated with the second data provider and receiving first encrypted data associated with a first data provider and second encrypted data associated with a second data provider. The first encrypted data is encrypted using the one or more first encryption keys and the second encrypted data is encrypted using the one or more second encryption keys. The method further comprises storing the first encrypted data on a first data vault and the second encrypted data on a second data vault. The method further comprises decrypting the first encrypted data stored on the first data vault using the respective one or more first encryption keys and decrypting the second encrypted data stored on the second data vault using the one or more second encryption keys to obtain respective first decrypted data and second decrypted data. The method further comprises deciding to provide the first decrypted data from the first data vault and/or the second decrypted data from the second data vault to the first and/or second application, depending on permissions of the first data provider and/or the second data provider.

According to a third aspect, a computer program product comprising code instructions stored on a computer readable medium to execute the method steps according to the second aspect when said program is executed on a computer platform, is provided.

Returning now to the figures, an example illustrated by Fig. 1 schematically illustrates an architecture with a user device 1 as an example of the aforementioned computer platform equipped with a vault engine 2 hosting two different data vaults 3, 4 communicating with a key server 20 and a search engine web server 11.

On a user device 1, a search engine travel app 5 communicates with a vault engine 2 hosting an airline A vault and an airline B vault. The search engine travel app 5 reads out, e.g. offers or other specific data stored on airline A vault 3 or airline B vault 4. The data stored on the airline A vault 3 and the airline B vault 4 is strictly separated from each other, since the data is encrypted using different encryption keys, e.g. encryption keys specific to airline A and airline B.

The search engine travel app 5 may first query an offer from airline A vault 3, which is received from there by the search engine travel app 5. The search engine travel app 5 may then query a further offer from airline B vault 4, which is also received from there by the search engine travel app 5.

The keys facilitating the encryption mentioned above are provided to the vault engine 2 and the respective airline A vault 3 and airline B vault 4 on the mobile device 1 by a key server 20. The key server 20, in turn, e.g. receives an airline A specific key from an airline A webserver 12 and an airline B specific key from an airline B webserver 13. Furthermore, search engine specific keys may be provided to the key server 20 as well, by a search engine web server 11.

Key distribution from the key server 20 to the vault engine 2 may be carried out over a network 70 and a content delivery network (CDN) cache & P2P distributed cache 15.

The example architecture of Fig. 1, with the vault engine communicating with an offer aggregator, is illustrated by Fig. 2.

In the architecture described here in conjunction with Fig. 2, between the search engine travel app 5 and the airline A vault 3 and the airline B vault 4 - but still within the vault engine 2 - an NDC (New Distribution Capability) aggregator 6, being an example for an offer aggregator, is used to aggregate information, like offers, originating from different data vaults, such as airline A vault 3 and airline B vault 4.

It is noted that the person skilled in the art is aware of the standard distribution architecture between online travel agencies (OLTAs), aggregators and airlines.

The search engine travel app 5 issues a request to the NDC aggregator 6 to retrieve aggregated information/offers from the airline A vault 3 and the airline B vault 4 via the vault engine 2. The NDC aggregator 6 then sends (simultaneous) requests to the airline A vault 3 and the airline B vault 4 which both respond to the NDC aggregator by sending the respective information/offers stored there to the NDC aggregator 6. The NDC aggregator 6 aggregates the information/offers received to form an aggregated offer which is returned to the search engine travel app 5, e.g. to display the offer to a user of the mobile device 1.

Before the above-described process takes place, the offer/information stored in airline A vault 3 is, for example, provided in encrypted form to said vault by the airline A web server 12 and the offer/information stored in airline B vault 4 is, for example, provided in encrypted form to said vault by the airline B web server 13.

Likewise, aggregation information, such as which features should be aggregated and how, format, display information or the like, is provided to the NDC aggregator 6 by the search engine webserver 11 so that the aggregated offers/information may be returned in a customized way to the search travel app 5.

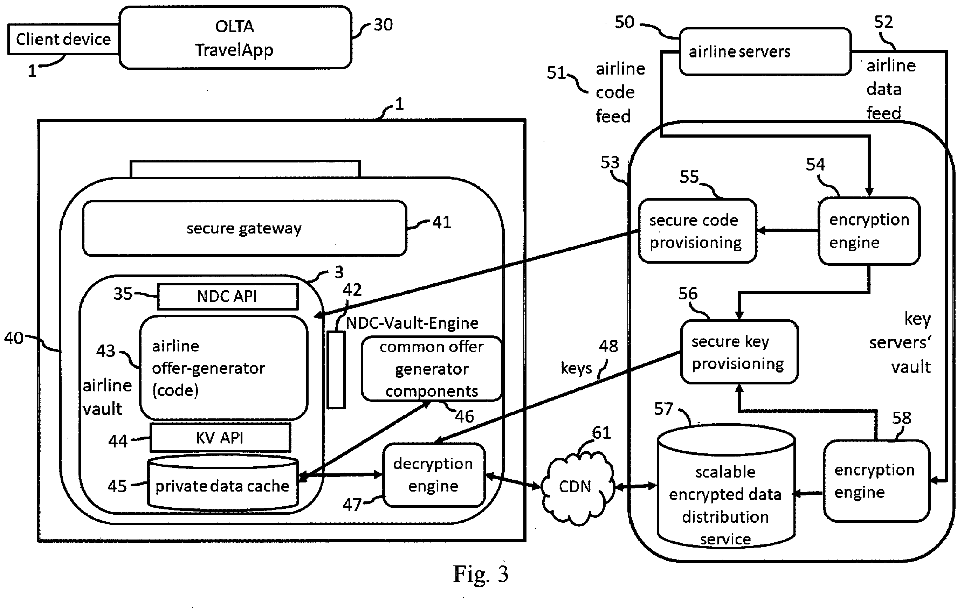

An example for a key exchange, the encryption and decryption processing between a vault engine on the client device and a key server vault, along with the modules involved in these procedures, is schematically illustrated by Fig. 3.

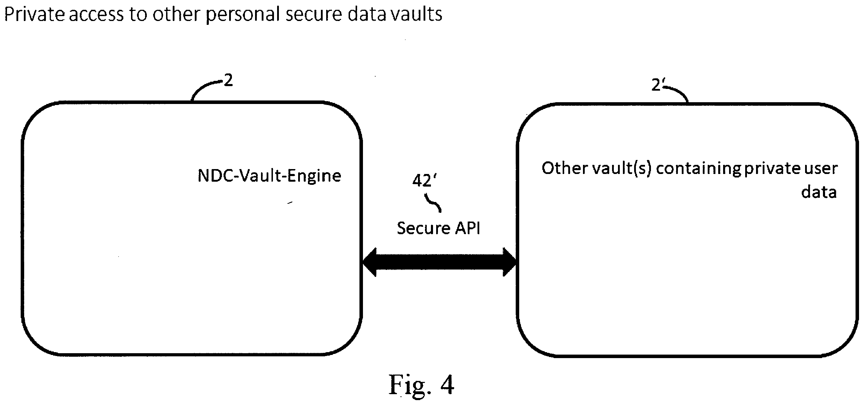

A client device 1 is equipped with an OLTA travel app 30 and an NDC vault engine 40. Please note that vault engine 40 may correspond to a concrete example of the more generic vault engine 2 depicted in Fig. 2. As illustrated in Fig. 3, the vault engine 40 of Fig. 3 at least comprises the entities depicted in Fig. 3, whereas the vault engine 2 illustrated in Fig. 2 and Fig. 4 do not need to contain all the specific modules illustrated as belonging to the vault engine 40 in Fig. 3. However, also the vault engine 2 shown in Fig. 2 above may include at least some if not all elements of vault engine 40 shown in Fig. 3, so that the vault engine 2 and the vault engine 40 may be identical as well. The NDC vault engine 40 communicates with the other software/systems on the mobile device (such as the OLTA travel app 30) via a secure gateway 41.

In the airline vault 3 an airline offer-generator (code) 43 is fed via a KeyValue (KV) API API (Application Programming Interface) 44 with data from a private data cache 45 and communicates with, e.g. with the NDC offer aggregator 6 (see Fig. 2) via an NDC API 35. The KV API 44 is used to push/get private already computed/fetched data by their key, for example, to cache them in the private data cache 45. The airline servers 50 provide an encrypted airline code feed 51, e.g. WASM code, via the key server's vault 53 over a secure code provisioning system 55 to the airline offer generator 43 which generates offers to be displayed, e.g. over the OLTA travel app 30.

The private data cache 45 of the airline vault 3 is supplied with common offer generator components 46 and decrypted data that is received via a decryption engine within the NDC vault engine 40. The NDC vault engine 40 receives the data over an airline data feed 52, which is encrypted via the encryption engine 58, also on the key servers' vault 53. The encrypted data feed is distributed to the private data cache over the scalable encrypted data distribution service 57 on the key server's vault 53 over the content distribution network (CDN) 61 and the decryption engine 47. The decryption engine 47 decrypts the encrypted data feed using keys 48, which are distributed by a secure key provisioning system 56 on the key server's vault 53.

The data stored in the private data cache is used to generate offers using the airline offer-generator (code) 43 as described above.

Examples for the data encryption are described in the following:

Data encryption option 1: an airline may request the key server 20 (Fig. 2) for CEK encryption keys, which are symmetric encryption keys. The airline may encrypt the data (e.g. fares, tariffs, airline specific WASM code etc.). This data can be pushed directly into the CDN 61 to enable the system to provide faster updates.

Data encryption option2: An airline may send the data (e.g. fares, tariffs, also their own WASM code) to the key server 20 (Fig. 2). The key server 20 (Fig. 2) may generate CEKs, encrypt data and push the data into CDN 61. Content (fares, code etc.) decryption may function by the key server 20 encrypting the CEKs using Key Encryption Keys (KEK = asymmetric keys), wherein there is one pair of KEK per authorised "user" for the data, so typically there are several OLTA travel apps 30 requiring the content, so that the content can be encrypted with OLTA-specific KEKs. It is possible as well that since a particular airline vault 3 is dedicated to a particular associated airline, relevant CEKs are encrypted with an airline specific KEK, for any OLTA travel app 30. Alternatively, the context of a given OLTA (e.g. Kayak) could be used to provide CEKs that may be encrypted with a Lufthansa-for-Kayak specific KEK.

The KEK (asymmetric encryption key) used therein is a public/private pair: the symmetric CEKs are encrypted using the public KEK and can only be decoded using the private KEK. The key server provider may be the only entity with knowledge of the private KEKs, which will be consumed by the e.g. airline specific data vaults 3, 4 (see also Fig. 1) on the mobile device. This allows to scale with a lot of flexibility as a KEK is very small, much smaller than the actual encrypted data. In addition, there can be many KEK "versions" i.e. per OLTA, per OLTA+carrier (e.g. airline), per country etc.

Key provisioning: KEK provisioning may be performed by a server-side management system to provision the proper KEKs in the various data vaults 3, 4 (see also Fig. 1), depending on which OLTA travel app 30/vault engine 40 is running the data vault(s) 3, 4 (see also Fig. 1). When the user starts the OLTA travel app 30, the application authenticates with the key server and it will then receive the right (encrypted) KEKs i.e. if the application is made by e.g. a specific OLTA travel app 30, it may authenticate as the specific OLTA travel app 30.

The OLTA application may then pass the (encrypted) KEKs to the data vault(s) 3, 4 (see also Fig. 1) on the mobile device. The private KEKs being sensitive, they should be multiple times encrypted: OLTA-encrypted, then vault-version-key encrypted. Since KEKs are small in size, the overhead can be negligible.

For the system to stay secure, a protection mechanism in case of compromising of code and/or keys is provided. The vault engine 2 may be equipped with a "secure boot" mechanism: when the vault 3 is initiated by the OLTA application, it may boot by dynamic library load, however the boot loader may first verify the signature of the code it boots. If the signature is not right, the boot will fail. A corresponding mechanism could also be used to enforce code or key updates: a (possibly small but) critical piece of the code (CC) is not present in the install: every time the data vault 3 boots, the data vault 3 receives the critical piece of code (CC) from CDN (decrypt it with the OLTA key) and then decrypt it with the boot-loader version-key. The key provider entity (e.g. key server 20) may update code in the field by replacing the critical piece of code with one encrypted by a new version-key. The KEKs may also be provided with an expiration date to limit the impact if KEKs would be compromised and discourage attacks since acquiring a KEK (which would typically involve some reverse engineering) would only lead to the possession of a KEK with a time-limited value.

If it is recognized that a key has been compromised, the CDN may be erased by and replaced by the same content encrypted with a new CEK: data vaults 3, 4, (see also Fig. 1) that are not given the right KEKs will then not be able to decrypt this new content.

The vault (engine) 2 software setup may be carried out as follows: when the OLTA travel app 30 starts, the OLTA travel app 30 may call the vault engine code and pass the KEKs as well as user/passenger ID (i.e. including frequent traveller cards if any) to the vaults 3, 4 (see also Fig. 1).

When the OLTA travel app 30 has a search to perform, it calls the vault code and passes the query parameters e.g. (origin, destination, dates etc) [and typically the target carrier list].

OLTA vault code initializes by initializing each provider (e.g. airline) vault 3, 4 (see also Fig 1). An airline-vault 3, 4 (see also Fig. 1) may first retrieve from the CDN, the airline-specific (e.g. WASM) code and may decrypt it before launching it.

Then the vault 3, 4 (see Fig. 1) may be queried to perform a search and may thereafter retrieve the relevant (e.g. fare) data from CDN and decrypt it before launching the search engine of the OLTA travel app 30.

As a result, the airline-specific WASM code feed may be used to retrieve the resulting Travel-Offers list and process it, which may include retrieving more data from CDN in order to present the travel search results in a manner intended by the airline providing the WASM code.

An example of a private access to personal secure data vault associated with other providers is schematically illustrated by Fig. 4.

The NDC vault engine 2 communicates via a secure API 42' with the other vault(s) containing private user data 2'. Security and separateness of the private user data vaults 2' may be guaranteed by the coding of the vault engine 2 - isolated memory containers for pieces of code associated with different airlines could be provided. Private data from specific airlines could only then be read out and used by the vault engine 2 if the vault engine 2 uses the airline specific code. Since the vault engine 2 may only be capable of executing one airline code at a time, merging of private airline data in the data vaults 2' may be prevented. Put differently, access of one private airline data by another airline code may be prevented by the vault engine's 2 implementation when each airline-specific code runs in its own memory space and all data access is controlled by the vault APIs, with authentication.

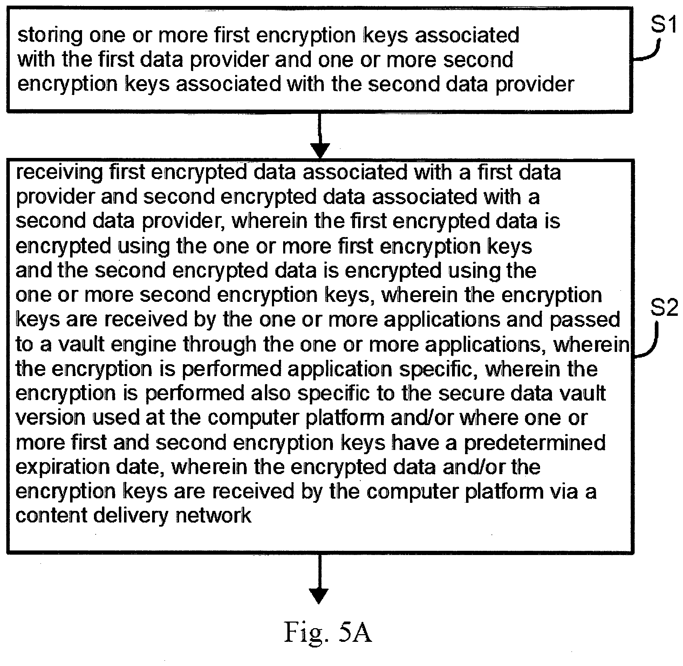

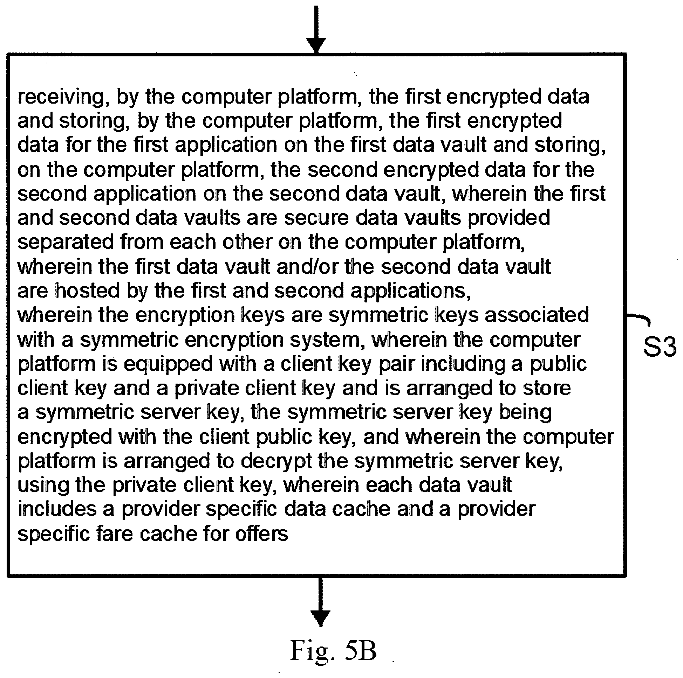

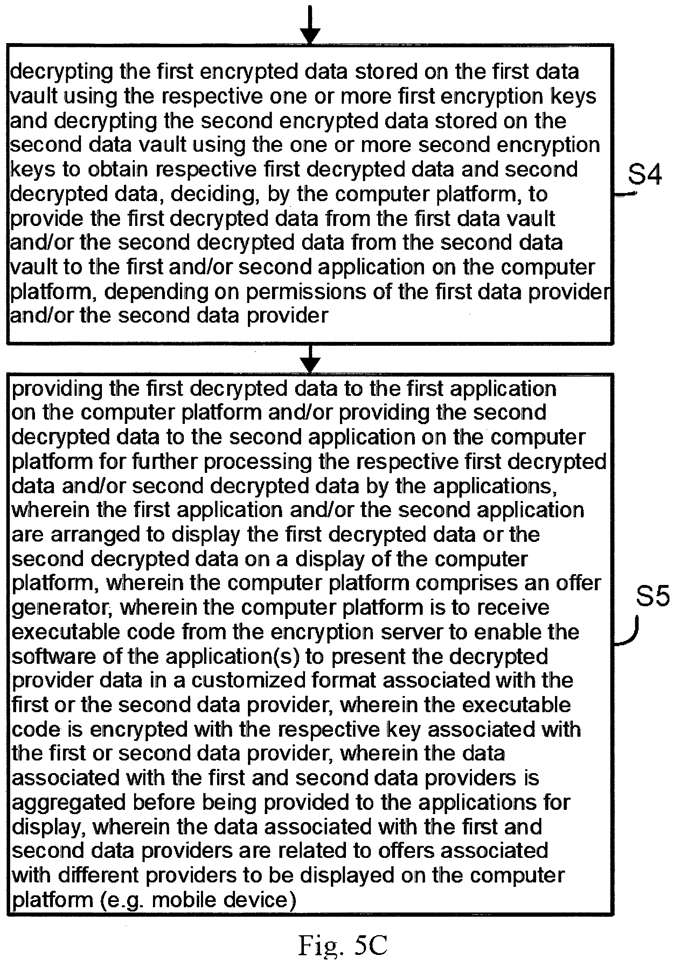

An example flowchart of the method of separately and securely processing data associated with different data providers, is illustrated by Figs. 5A to 5C.

An activity S1 involves storing one or more first encryption keys associated with the first data provider and one or more second encryption keys associated with the second data provider.

An activity S2 involves receiving first encrypted data associated with a first data provider and second encrypted data associated with a second data provider, wherein the first encrypted data is encrypted using the one or more first encryption keys and the second encrypted data is encrypted using the one or more second encryption keys, wherein the encryption keys are received by the one or more applications and passed to a vault engine through the one or more applications, wherein the encryption is performed application specific, wherein the encryption is performed also specific to the secure data vault version used at the computer platform and/or where one or more first and second encryption keys have a predetermined expiration date, wherein the encrypted data and/or the encryption keys are received by the computer platform via a content delivery network.

An activity S3 involves receiving, by the computer platform, the first encrypted data and storing, by the computer platform, the first encrypted data for the first application on the first data vault and storing, on the computer platform, the second encrypted data for the second application on the second data vault, wherein the first and second data vaults are secure data vaults provided separated from each other on the computer platform, wherein the first data vault and/or the second data vault are hosted by the first and second applications, wherein the encryption keys are symmetric keys associated with a symmetric encryption system, wherein the computer platform is equipped with a client key pair including a public client key and a private client key and is arranged to store a symmetric server key, the symmetric server key being encrypted with the client public key, and wherein the computer platform is arranged to decrypt the symmetric server key, using the private client key, wherein each data vault includes a provider specific data cache and a provider specific fare cache for offers.

An activity S4 involves decrypting the first encrypted data stored on the first data vault using the respective one or more first encryption keys and decrypting the second encrypted data stored on the second data vault using the one or more second encryption keys to obtain respective first decrypted data and second decrypted data, deciding, by the computer platform, to provide the first decrypted data from the first data vault and/or the second decrypted data from the second data vault to the first and/or second application on the computer platform, depending on permissions of the first data provider and/or the second data provider.

An activity S5 involves providing the first decrypted data to the first application on the computer platform and/or providing the second decrypted data to the second application on the computer platform for further processing the respective first decrypted data and/or second decrypted data by the applications, wherein the first application and/or the second application are arranged to display the first decrypted data or the second decrypted data on a display of the computer platform, wherein the computer platform comprises an offer generator, wherein the computer platform is to receive executable code from the encryption server to enable the software of the application(s) to present the decrypted provider data in a customized format associated with the first or the second data provider, wherein the executable code is encrypted with the respective key associated with the first or second data provider, wherein the data associated with the first and second data providers is aggregated before being provided to the applications for display, wherein the data associated with the first and second data providers are related to offers associated with different providers to be displayed on the computer platform (e.g. mobile device).

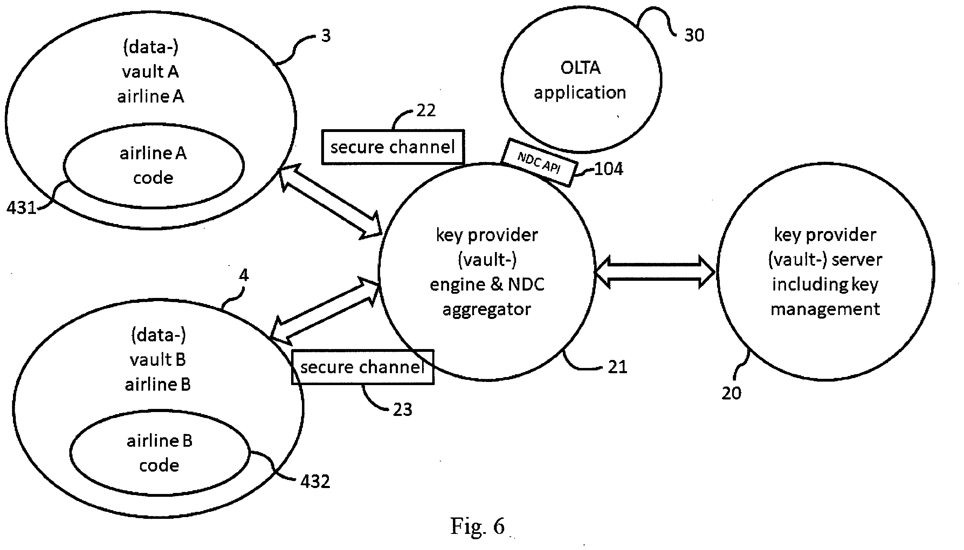

An example with a vault engine being hosted by the key provider/key management party is schematically illustrated by Fig. 6.

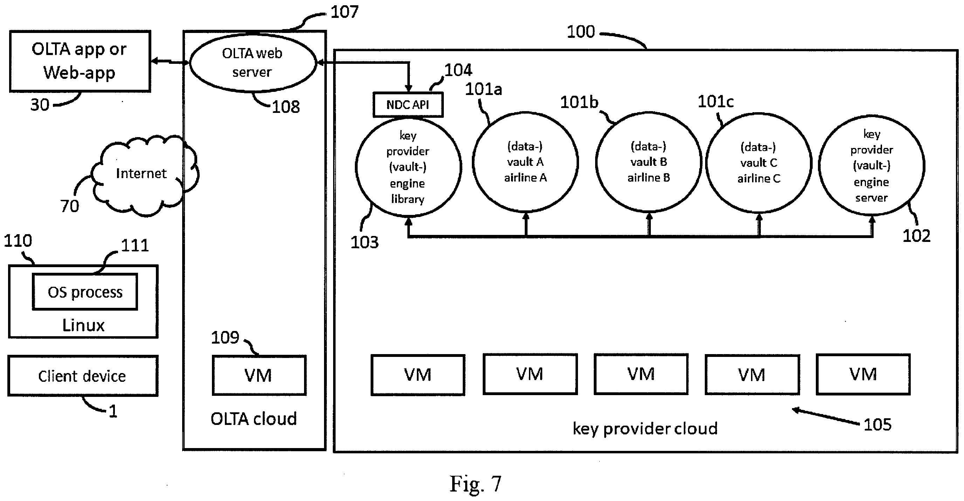

The key provider (vault-) server 20 (including the key management) is in communication with a key provider (vault-) engine and NDC aggregator 21. The key provider (vault-) server 20 may be part of a key provider/key management party cloud (see Figs. 7 to 12) or a key provider data centre.

The (key provider) vault engine, in this example, provides two data vaults 3, 4 which communicate with the key provider (vault-) engine and NDC aggregator 21 over respective secure channels 22, 23. The key provider (vault-) engine and NDC aggregator 21 may be implemented as a multi-core backend intended to reach a high number of transactions per second (TPS) or as a single process on a client device (e.g. smartphone) with around 0.2 TPS. Multiple instances of the key provider (vault-) engine and NDC aggregator 21 may be provided at the same time. Likewise, multiple instances of the data vaults 3, 4 may be provided at the same time. The data vaults 3, 4 may be implemented on a multi-core backend intended to service a high TPS number, for example, serving multiple users in parallel, or at a significantly lower processing rate when running for a single end user device (e.g. smartphone) like 0.2 TPS.

The first data vault hosted by the vault engine, in this example, is data vault A 3 associated with airline A. The data vault A may contain airline A code 431 to present e.g. offers or other data using a code specific to airline A (see comments on Fig. 3 for specifics on the code).

Likewise, the second data vault hosted by the vault engine, in this example, is data vault B 4 associated with airline B. The data vault B may contain airline B code 432 to present e.g. offers or other data using a code specific to airline B (see comments on Fig. 3 for specifics on the code).

The data stored on the data vault A 3 and/or the data vault B 4 may be transferred via the respective secure channels 22, 23 to the key provider (vault-) engine and NDC aggregator 21. Offers etc. may be generated by the NDC aggregator 21 and provided to an OLTA application 30 via an NDC API for further processing and/or display. The OLTA application 30 may be implemented as a web application or a mobile application. Regardless of whether the OLTA application 30 is implemented as web application or mobile application, the OLTA application 30 may include a client device (e.g. smartphone) part and a server part.

An example with a plurality of data vaults hosted on a key provider/key management party cloud, as well as a vault engine library hosted by the key provider/key management party and running on a key provider/key management party cloud is schematically illustrated by Fig. 7.

In the example illustrated by Fig. 7, a plurality of virtual machines 105 are hosted on a key provider cloud 100. The key provider cloud 100 includes a key provider (vault-) engine server 102 which may execute a key provider (vault-) engine library 103. The key provider cloud 100 may host a plurality of data vaults like data vault A 101a, associated with airline A, data vault B 101b, associated with airline B, and data-vault C 101c, associated with airline C. The virtual machines 105 may be used in providing the data vaults A, B, C 101a-101c and executing the key provider (vault-) engine library 103. For example, one virtual machine could be provided per entity (data vaults A, B, C 101a-101c, key provider (vault-) engine server)).

An NDC API 104 is used to enable communication between the key provider (vault-) engine library 103 and the OLTA web server 108 which is a part of a OLTA cloud 107. A virtual machine 109 may be present in the OLTA cloud to enable the access of an OLTA app or Web-app 30 to the OLTA web server 108 over the internet 70. The OLTA app or Web-app 30 may run on a client device 1 based on an operating system 110 (with an OS process 11) like Linux. The client device 1 may also be a user's smartphone with an Apple^{®} or Android^{®} operating system.

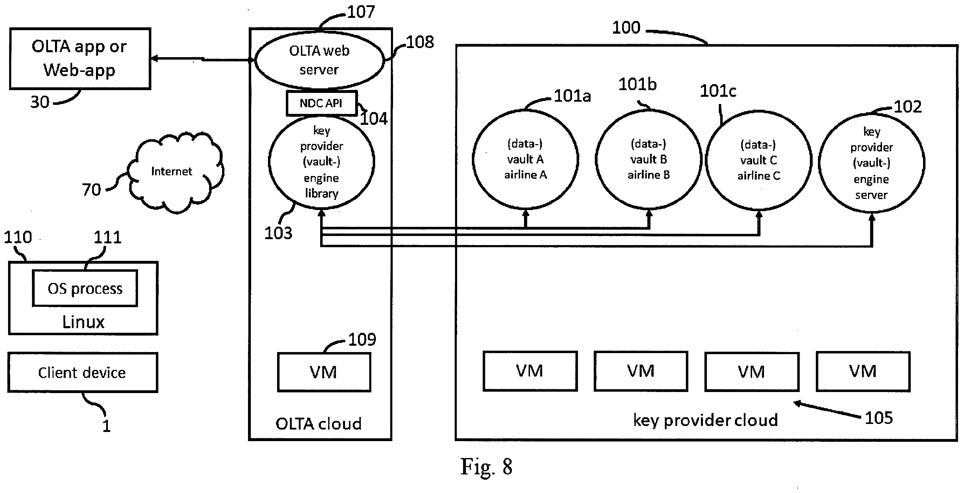

An example with a plurality of data vaults hosted on the key provider/key management party cloud with the vault engine library running on a third-party cloud, e.g. on an online travelling agent (OLTA) cloud, is schematically illustrated by Fig. 8.

The example illustrated by Fig. 8 differs from the example illustrated by Fig. 7 in that the key provider (vault-) engine library is hosted by the OLTA cloud 107 instead of being hosted by the key provider cloud 100. The NDC API 104 to facilitate the communication between the OLTA web server 108 and the key provider (vault-) engine library 103 may also be hosted by the OLTA cloud 107 instead of being hosted by the key provider cloud 100.

The key provider (vault-) engine library 103 being located on the OLTA cloud 107. The key provider (vault-) engine library may provide the data vaults A, B, C 101a-101c on the key provider cloud 100 and may communicate with the key provider (vault-) engine server. To provide an example, the key provider (vault-) engine server on the key provider cloud 100 calls the key provider (vault-) engine library 103 on the OLTA cloud 107, which then provides/hosts the data vaults A, B, C 101a-101c on the key provider cloud 100.

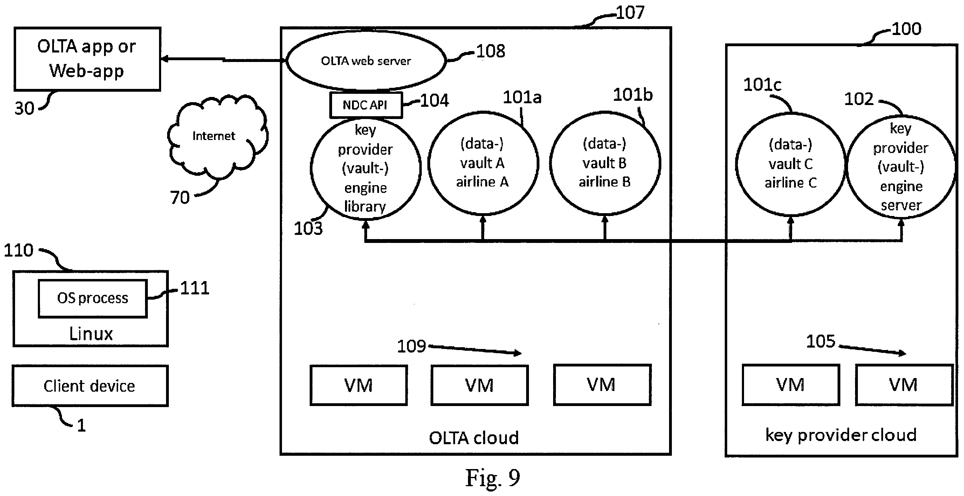

An example with data vaults partially hosted on the key provider/key management party cloud and data vaults partially hosted by a third party, e.g. on an OLTA party cloud, with the vault engine library running on the third-party cloud, e.g. the OLTA cloud, is schematically illustrated by Fig. 9.

The example architecture illustrated by Fig. 9 differs from the example architecture shown in Fig. 8 in that not all the data vaults A, B, C 101a-101c are hosted by the key provider cloud 100, but some data vaults (here: data vault A 101a and data vault B 101b) are hosted by the OLTA cloud 109 and some data vaults are hosted on the key provider cloud 100. In the specific example illustrated by Fig. 9, the data vault C 101c is hosted on the key provider cloud 100.

Hosting the data vaults/(vault-) engine server/(vault-) engine library may be achieved by using virtual machines 109 on the OLTA cloud 107, for example, one virtual machine per data vault 101a, 101b and by using virtual machines 105 on the key provider cloud 100, also here, for example, one virtual machine for data vault 101c and one virtual machine for key provider (vault-) engine server 102.

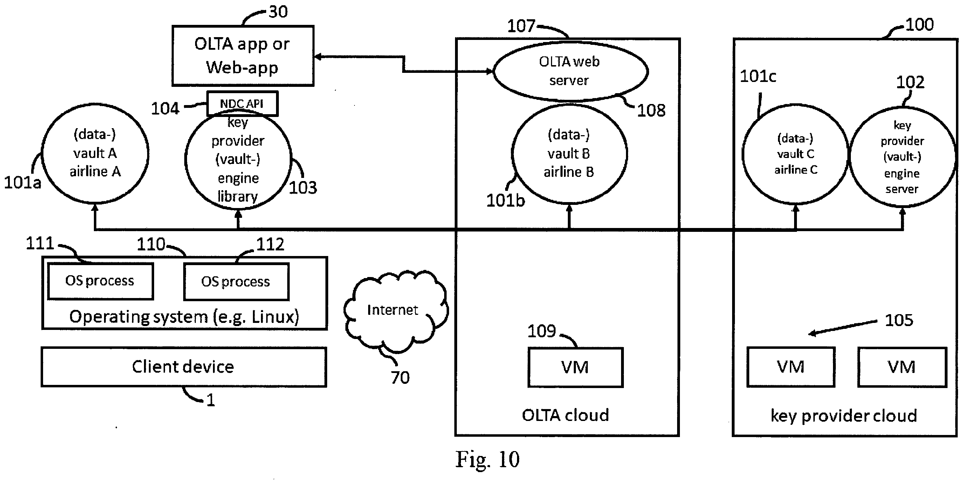

An example with data vaults hosted partially on the provider/key management party cloud, partially hosted on the third-party cloud, e.g. the OLTA cloud, and partially hosted on the client device, the vault engine library running on the client device is schematically illustrated by Fig. 10.

In the example shown in Fig. 10, the client device 1, the OLTA cloud 107 as well as the key provider cloud 100 host a data vault. The data vault A 101a is hosted on the client device 1, the data vault B 101b is hosted on the OLTA cloud 107 and data vault C is hosted on the key provider cloud 100.

The key provider (vault-) engine library 103 is also hosted on the client device 1 and communicates via the NDC API 104 with an OLTA app or Web-app 30 also on the client device 1. Hence, in contrast to the examples shown in figures 7 to 9, besides the cloud-based data vaults there is/are also (a) local client device based data vault, here: data vault A 101a. The data vault A 101a may be hosted by an OS process 111, while the key provider (vault-) engine library may be hosted by the OS process 112 on the client device 1. The client device 1 may be a user's smartphone with an Apple^{®} or Android^{®} operating system.

The example architectures shown in figures 8, 9 and 10 provide improved data security since different processes on different clouds are used to provide the data vaults. Hence, even if one of the processes/data vaults should be hacked/compromised on either the OLTA cloud 107 or the key provider cloud 100, the hacker cannot use a common memory (e.g. RAM) on a single cloud hosting all the processes/data vaults to conduct the attack. Furthermore, in the communication between the OLTA cloud 107 and the key provider cloud 100 used to provide the data vaults A, B, C 101a-101c mutual authentication after establishing the TCP/IP connection may be used.

Fig. 10 illustrates a system in which various vaults are run in different processes. On the server-side, every component is basically encapsuled in a dedicated OS process, in virtual machines (VMs) running on the server. If the client device 1 is a smartphone, in a basic application there would be only a single process, which is not intended here for security reasons. Instead, each data vault 101a-101c may be implemented in a different (OS) process because when doing so, the RAM of each process may be isolated at the Operating System level (leveraging hardware memory management unit (HW MMU)). This may improve system security, since in order to retrieve data associated with the vault engines, an attacker would have to hack the operating system.

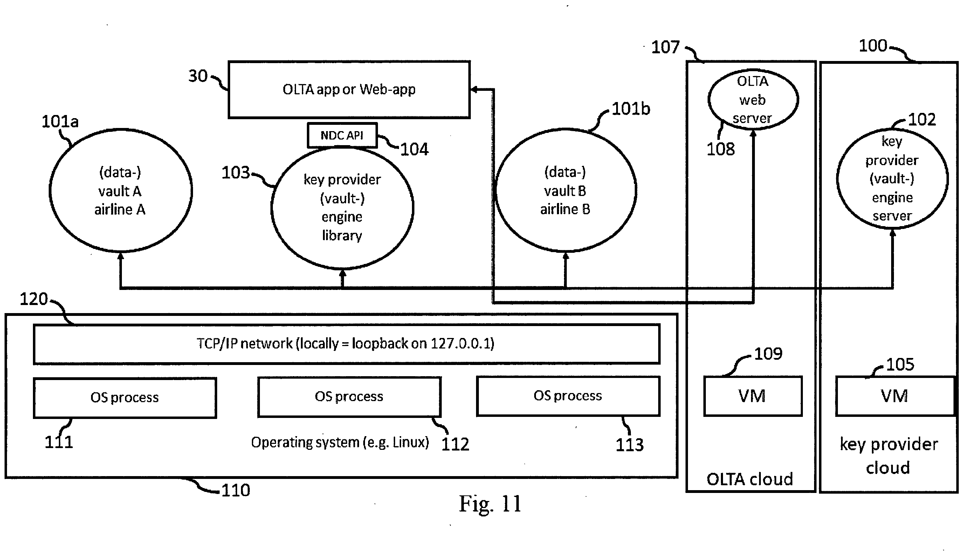

An example with all data vaults being hosted on the client device is schematically illustrated by Fig. 11. The architecture shown in Fig. 11 largely corresponds to the architecture shown in Figs. 1 and 2.

The operating system of a client device 1 (see Fig. 7 etc.), for example, uses three different OS processes 111, 112, 113 to host a data vault A 101a, the key provider (vault-) engine library 103 and the data vault B 101b. Communication between the OS processes 111, 112, 113 and, for example, between the data vault A 101a, the data vault B 101b and the key provider (vault-) engine library 103 may occur over the local loopback on 107.0.0.1 of the TCP/IP network on the client device 1 (see Fig. 7 etc.).

In this example, the key provider (vault-) engine library 103 communicates with the OLTA app or Web-app 30 (on the client device) over the NDC API 104, also on the client device. The data vaults A, B, C 101a-101c communicate with the key provider (vault-) engine server 102 on the key provider cloud. The OLTA app or Web app 30 communicates with the OLTA web server 108 on the OLTA cloud 107. In this example, neither the OLTA cloud 107 nor the key provider cloud 100 host any data vaults - all data vaults A, B, C, 101a-101c are hosted by the client device 1.

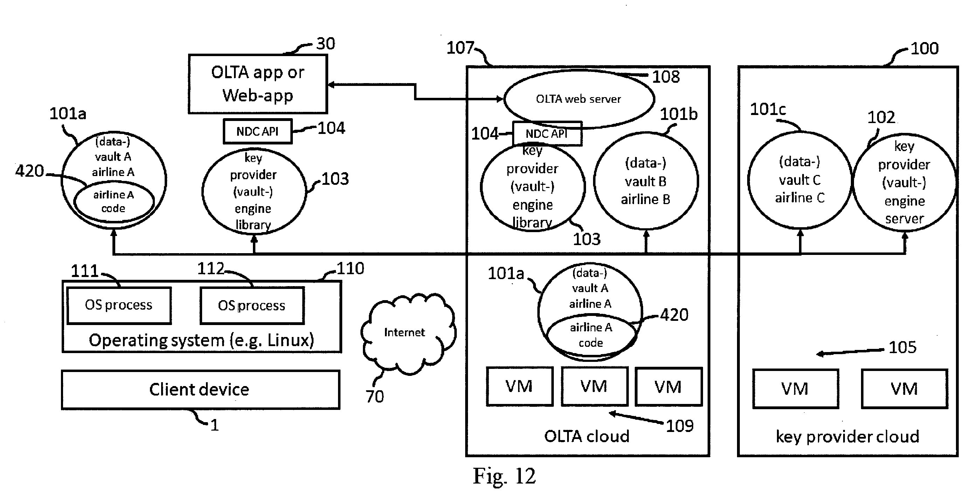

In conjunction with the example illustrated by Fig. 11, the data vaults A, B, C 101a-101c may be implemented in the following: One OS process 111 to 113 may be provided for each data vault 101a, 103, 101b to improve tamper resistance. On the server-side, such a separation may be reached due to the virtual machine (VM) technologies (one VM is at least one different process), see also Fig. 12. On end-user devices like smartphones, two different airline vault engines 101a, 101b may be running on the same smartphone 1. There could be three OS processes 111 to 113, one for each airline data vault 101a, 101b, one for the key-provider vault library 103 linked with the OLTA application 30 that runs the user interface of the smartphone 1. For additional safety, there could be even four OS processes: one for each airline data vault, one for the key-provider vault library (e.g. running as a "daemon"), and one for the OLTA application with the user interface (not shown in Fig. 11).

The communication between the vaults 101a, 101b, 103, could take place via secure channels. Within the same process, this may be realized via an API 104 (software calls). Between different processes on the same machine, various forms of inter-process communication (IPC) could be used, for example, persistent TCP/IP (Transmission Control Protocol/Internet Protocol) connections could be used, with authentication at connection time, optionally with TLS for additional safety. This may be the case for both vaults running on different machines/VMs cloud-server side and for different processes on the same hardware, including the end-user smartphone 1. The NDC standard defines a dedicated API 104 in a way that can be implemented both as software API calls or network "query/reply" type of traffic.

An example like the one illustrated by Fig. 10 with data vaults partially hosted on the key provider/key management cloud, the third-party cloud (e.g. OLTA cloud) and the client device, with a back-up data vault being hosted by the third party and with instances of the vault engine library running on the third-party cloud (e.g. OLTA cloud) and the client device is shown in Fig. 12.

In the example shown in Fig. 12, redundancy is provided compared to the example shown in Fig. 10, since a backup data vault A 101a and a backup key provider (vault-) engine library 103 are provided on the OLTA cloud 107. If the client-side data vault(s) should fail or not be accessible, at least the data vault(s) on the OLTA cloud 107 could be accessed by the OLTA web server 108 communicating with the OLTA app or Web-app 30 on the client device 1. One scenario in which the data vault(s) fail or are not accessible would be a security breach, for example, if some keys have been compromised by someone hacking a smartphone or a security risk has been detected in the data vault implementation, etc. Typically, an incident like this may take a bit of time to be fixed by a new release or until the compromised keys expire. For a few days one entity using the data vaults, like an OLTA (or airline, or the key-provider) may want to suspend the smartphone-side operation of vaults and rely on the server-side backups. The architecture allows this type of resilience: The end-user-side vault relies on an already existing hardware device, such as the user smartphone. This may come with associated operational risks, but the vault architecture may enable "intrinsically" a server-side backup solution. So that once an end user side vault engine is not operational/compromised etc., the (cloud) server-side backup of this vault engine may be used instead.

The data vault A 101a, associated with airline A both on the client device 1 and on the OLTA cloud 107 are equipped with airline A code (see Fig. 3).

Regarding the examples of Figs. 6 to 12, also if the data vaults are located on a server and/or on a cloud and/or on a mobile device as described in relation to these figures, the data vaults are assigned to an end user/client and the data vaults still show the above-described secure separation between different data sets from different data providers.

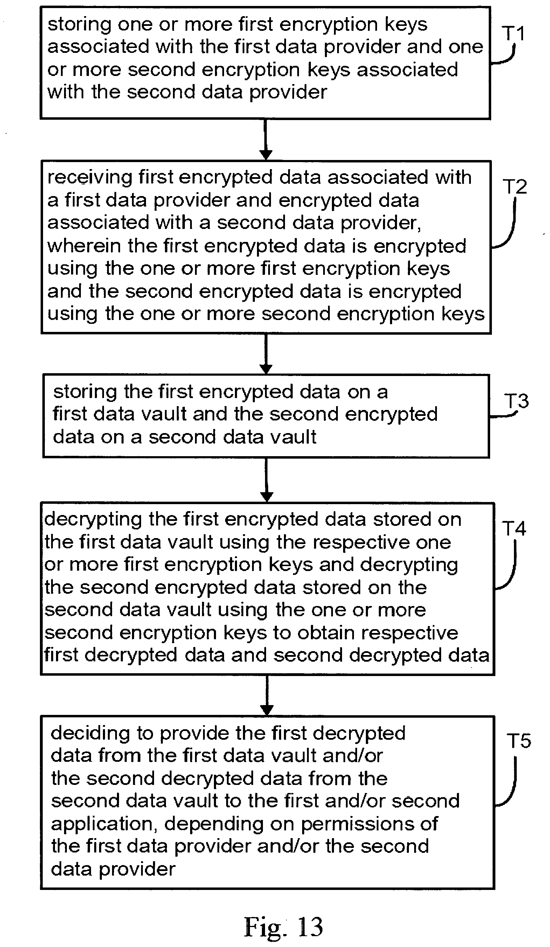

An example flowchart of the method of separately and securely processing data associated with different data providers, the method being implemented by a single or a plurality of interconnected computer devices is illustrated by Fig. 13.

An activity T1 comprises storing one or more first encryption keys associated with the first data provider and one or more second encryption keys associated with the second data provider.

An activity T2 comprises receiving first encrypted data associated with a first data provider and encrypted data associated with a second data provider, wherein the first encrypted data is encrypted using the one or more first encryption keys and the second encrypted data is encrypted using the one or more second encryption keys.

An activity T3 comprises storing the first encrypted data on a first data vault and the second encrypted data on a second data vault.

An activity T4 comprises decrypting the first encrypted data stored on the first data vault using the respective one or more first encryption keys and decrypting the second encrypted data stored on the second data vault using the one or more second encryption keys to obtain respective first decrypted data and second decrypted data.

An activity T5 comprises deciding to provide the first decrypted data from the first data vault and/or the second decrypted data from the second data vault to the first and/or second application, depending on permissions of the first data provider and/or the second data provider.

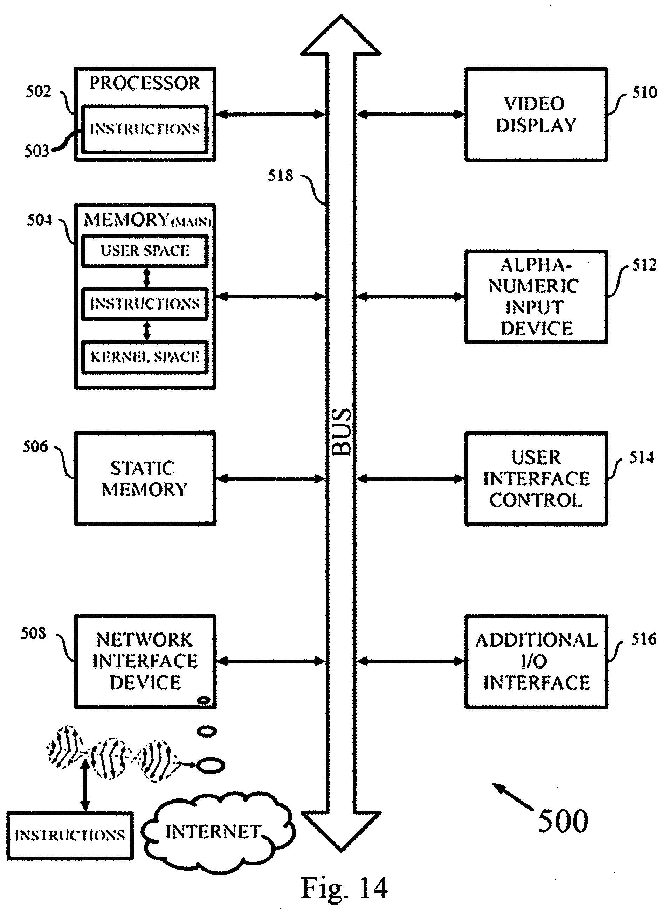

A diagrammatic system 500 is shown in Fig. 14. The system shown in Fig. 14 schematically illustrates an example of a computerized system, which may represent one or more of the entities illustrated by Figs. 1 to 13.

The processor 502 is arranged to execute a set of instructions 503, to cause the computer system 500 to perform any of the methodologies of the computer-implemented method of separately and securely processing data associated with different data providers. Likewise, the one or more computers on which the above-mentioned computer program product is executed may be arranged like this.

The computer system 500 includes a processor 502, a main memory 504 and a network interface 508. The main memory 504 includes a user space, which is associated with user-run applications, and a kernel space, which is reserved for operating-system- and hardware-associated applications. The computer system 500 further includes a static memory 506, e.g. non-removable flash and/or solid-state drive and/or a removable Micro or Mini SD card, which permanently stores software enabling the computer system 500 to execute functions of the computer system 500. Furthermore, it may include a video display 510, a user interface control module 514 and/or an alpha-numeric and cursor input device 512. Optionally, additional I/O interfaces 516, such as card reader and USB interfaces may be present. The computer system components 502 to 516 are interconnected by a data bus 518.

In some exemplary embodiments the software programmed to carry out (parts of) the method described herein is stored on the static memory 506; in other exemplary embodiments, external databases are used.

An executable set of instructions (i.e. software) 503 embodying anyone, or all, of the methodologies described above, resides completely, or at least partially, permanently in the non-volatile memory 506. When being executed, process data resides in the main memory 504 and/or the processor 502.

In general, the routines executed to implement the embodiments, whether implemented as part of an operating system or a specific application, component, program, object, module or sequence of instructions, or even a subset thereof, may be referred to herein as "computer program code" or simply "program code". Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the applicant's general inventive concept.

## Claims

1. A computer platform for separately and securely processing data associated with different data providers, wherein the computer platform comprises:
a first data vault, a second data vault and a plurality of applications comprising at least a first application and a second application,
the computer platform being arranged to:
store one or more first encryption keys associated with the first data provider and one or more second encryption keys associated with the second data provider,
receive first encrypted data associated with a first data provider and second encrypted data associated with a second data provider, wherein the first encrypted data is encrypted using the one or more first encryption keys and the second encrypted data is encrypted using the one or more second encryption keys,
store the first encrypted data on the first data vault and the second encrypted data on the second data vault,
decrypt the first encrypted data stored on the first data vault using the respective one or more first encryption keys and decrypt the second data stored on the second data vault using the one or more second encryption keys to obtain respective first decrypted data and second decrypted data,
decide to provide the first decrypted data from the first data vault and/or the second decrypted data from the second data vault to the first and/or second application on the computer platform, depending on permissions of the first data provider and/or the second data provider.

2. The computer platform of claim 1, wherein the first application is to display decrypted data from the first data vault on the computer platform and the second application is to display decrypted data from the second data vault on the computer platform.

3. The computer platform of claims 1 or 2, wherein the first data vault and/or the second data vault are hosted by the respective first and second applications.

4. The computer platform of any one of claims 1 to 3, wherein the encryption keys are symmetric keys associated with a symmetric encryption system.

5. The computer platform of claim 4, wherein the computer platform is equipped with a client key pair including a public client key and a private client key, and is arranged to
store a symmetric server key, the symmetric server key being encrypted with the client public key,
decrypt the symmetric server key using the private client key.

6. The computer platform of any of claims 1 to 5, wherein the encryption keys are received by the applications and passed to a vault engine through the applications, wherein the encryption is performed application specific.

7. The computer platform of claim 6, wherein the encryption is performed specific to the secure data vault version used at the computer platform and/or where one or more first and second encryption keys have a predetermined expiration date.

8. The computer platform of any one of claim 2 to 7, wherein the computer platform comprises an offer generator, wherein the computer platform is to receive executable code from the encryption server to enable the application software to present the decrypted provider data in a customized format associated with the first or the second provider.

9. The computer platform of claim 8, wherein the executable code is encrypted with the respective key associated with the first or second data provider.

10. The computer platform of any one of claims 1 to 9, wherein the computer platform is to receive the encrypted data and/or the encryption keys via a content delivery network.

11. The computer platform of any one of claims 2 to 10, wherein data associated with the first and second data providers is aggregated before being provided to the applications for display.

12. The computer platform of any one of claims 2 to 11, wherein the data associated with the first and the second data provider are related to offers associated with different providers to be displayed on the computer platform, wherein each data vault includes a provider specific data cache and a provider specific fare cache for offers.

13. The computer platform of any one of claims 1 to 12, wherein server-side backups of the first and second vault engines are provided on one or more servers separate from the computer platform, wherein in the event of a security breach or fault related to at least one of the client-side vaults, the first and second server-side vault engines can be used until the security breach or fault is cleared.

14. A computer-implemented method of separately and securely processing data associated with different data providers, wherein the method comprises:
storing one or more first encryption keys associated with the first data provider and one or more second encryption keys associated with the second data provider,
receiving first encrypted data associated with a first data provider and second encrypted data associated with a second data provider, wherein the first encrypted data is encrypted using the one or more first encryption keys and the second encrypted data is encrypted using the one or more second encryption keys,
storing the first encrypted data on a first data vault and the second encrypted data on a second data vault,
decrypting the first encrypted data stored on the first data vault using the respective one or more first encryption keys and decrypting the second encrypted data stored on the second data vault using the one or more second encryption keys to obtain respective first decrypted data and second decrypted data,
deciding to provide the first decrypted data from the first data vault and/or the second decrypted data from the second data vault to the first and/or second application, depending on permissions of the first data provider and/or the second data provider.

15. A computer program product comprising code instructions stored on a computer readable medium to execute the method steps according to claim 14, when said program is executed on a computer platform.
